# FASCICULE DE BREVET EUROPEEN

(11) **EP 2 901 540 B1**
(45) Date de publication et mention de la délivrance du brevet: **19.09.2018**
(21) Numéro de dépôt: 13782736.6
(22) Date de dépôt: 24.09.2013
(51) Int. Cl.: H02J 7/02, B60L 11/18, H02M 1/10

(54) **SYSTÈME DE CHARGE D'UNE BATTERIE D'UN VÉHICULE AUTOMOBILE**
SYSTEM ZUM LADEN EINER KRAFTFAHRZEUGBATTERIE
SYSTEM FOR CHARGING A MOTOR VEHICLE BATTERY

(30) Priorité: 25.09.2012 FR 1258984
(43) Date de publication de la demande: 05.08.2015
(73) Titulaire: Renault S.A.S., 92100 Boulogne-Billancourt (FR)
(72) Inventeur: RIPOLL, Christophe, F-78460 Chevreuse (FR); DURAND, Jérôme J., F-75015 Paris (FR); REYSS, Olivier, F-92120 Montrouge (FR); KONATE, Christophe, F-91300 Massy (FR); CUILLER, Etienne, F-28230 Epernon (FR); PLOIX, Olivier, F-78640 Villiers Saint Frederic (FR)
(86) Numéro de dépôt international: PCT/FR2013/052222
(87) Numéro de publication internationale: WO 2014/049254

(56) Documents cités:
- FR-A1- 2 943 188
- FR-A1- 2 946 473
- FR-A1- 2 946 810
- US-A- 5 341 075

## Description

L'invention a pour domaine technique la charge d'une batterie d'un véhicule automobile, notamment la charge d'une batterie de traction d'un véhicule automobile électrique.

Il existe des systèmes de charge qui peuvent être branchés sur différents types de réseau électrique (nombre de phases différent, puissance variable).

Cela étant, les contraintes de chacun des réseaux sont difficilement compatibles et il est très difficile d'obtenir un bon rendement énergétique pour chacun des types de réseau électrique.

Par exemple, la demande FR2943188 décrit un dispositif de charge d'une batterie comprenant un étage d'entrée redresseur destiné à être raccordé à un réseau d'alimentation et un étage de sortie onduleur destiné à être raccordé à la batterie. Le dispositif comprend des moyens de régulation du courant moyen issu de l'étage d'entrée autour d'une valeur de courant élaborée à partir du courant maximum fourni par le réseau d'alimentation et en fonction d'un coefficient au moins égal à un rapport entre la tension maximale redressée par l'étage d'entrée et la tension de la batterie.

Ce dispositif peut fonctionner avec un réseau triphasé ou monophasé. Mais, il ne permet pas d'obtenir un bon rendement avec un réseau monophasé de faible puissance. C'est d'autant plus préjudiciable que la plupart des particuliers utilisateurs d'une voiture électrique ne disposent pas d'un réseau triphasé mais sont plutôt raccordés à un réseau électrique monophasé dont la fréquence est 50Hz et la tension 230 volts en France par exemple.

Au vu de ce qui précède, un but de l'invention est de proposer un système de charge d'une batterie qui permette de résoudre au moins en partie les inconvénients mentionnés ci-dessus.

En particulier, l'objectif de l'invention est de proposer un système de charge qui puisse fonctionner avec un bon rendement avec différents réseaux électriques et notamment avec un réseau triphasé et avec un réseau monophasé.

Un but de l'invention est de proposer une bonne compatibilité avec différents types de réseau d'alimentation.

Un autre but de l'invention est également d'augmenter le rendement énergétique des systèmes de charge.

Selon un premier aspect, l'invention a pour objet un système de charge d'une batterie d'un véhicule automobile, destiné à être raccordé à un réseau d'alimentation, ledit réseau d'alimentation étant un premier réseau d'alimentation polyphasé ou un deuxième réseau d'alimentation polyphasé ou monophasé d'une puissance inférieure à celle du premier réseau, comprenant :
- un étage de filtrage comprenant une pluralité de condensateurs ;
- un premier étage redresseur comprenant une pluralité d'interrupteurs ; et
- un étage onduleur destiné à être raccordé à la batterie.

Selon une caractéristique générale, le système de charge comprend :
- un deuxième étage redresseur comprenant une pluralité d'interrupteurs, ledit deuxième étage redresseur étant destiné à être connecté entre ledit réseau d'alimentation et la batterie, en parallèle de l'étage de filtrage et d'une partie au moins du premier étage redresseur ; et
- un condensateur dont la capacité est inférieure à celle des condensateurs de l'étage de filtrage, connecté entre deux phases ou entre une phase et un neutre du deuxième réseau d'alimentation.

Ainsi, en plus de l'étage de filtrage et du premier étage redresseur dédiés à un réseau d'alimentation polyphasé et de forte puissance, il est prévu de munir le système de charge d'un deuxième étage redresseur et d'une capacité de filtrage. On entend ici par forte puissance par exemple une puissance supérieure à 3 kW et par faible puissance par exemple une puissance inférieure à 3 kW.

L'étage de filtrage et le premier étage redresseur sont dimensionnés pour un réseau d'alimentation polyphasé et de forte puissance. Le dimensionnement n'est pas optimisé pour un réseau d'alimentation de faible puissance et/ou non triphasé (par exemple monophasé). En connectant en parallèle de l'étage redresseur et de l'étage de filtrage un deuxième étage redresseur et une capacité plus adaptés à un réseau non triphasé de faible puissance, on augmente le rendement du système de charge lors de l'utilisation de ce réseau d'alimentation. Ces deux composants complètent l'étage redresseur et l'étage de filtrage pour permettre un traitement du courant en provenance d'un réseau non triphasé de faible puissance sans passer par l'étage de filtrage ni le premier étage redresseur.

Par ailleurs, en plaçant une capacité de filtrage de valeur inférieure entre les deux phases ou une phase et un neutre du réseau d'alimentation, on réduit la capacité de filtrage du système de charge, ce qui permet une baisse significative du courant réactif et donc une augmentation du facteur de puissance.

Selon un mode de réalisation, les interrupteurs du deuxième étage redresseur comprennent des composants électroniques dimensionnés pour le deuxième réseau d'alimentation.

On peut, par exemple, dimensionner les composants du deuxième étage redresseur pour un réseau d'alimentation dont la puissance est inférieure à 3 kW.

Pour prélever du courant avec un redresseur sur un réseau électrique de forte puissance, il faut prévoir des interrupteurs composés par deux cellules de semi-conducteur. Le deuxième étage redresseur étant dédié au prélèvement de courant sur un réseau électrique de faible puissance et/ou monophasé, il n'est plus nécessaire d'utiliser deux cellules de semi-conducteur. En utilisant des interrupteurs du deuxième étage redresseur dimensionnés pour une puissance faible, on peut diminuer les pertes de conduction.

Ainsi, par exemple, en choisissant pour les interrupteurs de deuxième étage redresseur par exemple des transistors MOSFET ou IGBT (termes anglo-saxons bien connus de l'homme du métier) composés d'une seule cellule, on peut facilement réduire les pertes de conduction qui sont proportionnelles à la valeur du courant traversant l'étage redresseur. Le gain en rendement dû à cette réduction des pertes de conduction est d'autant plus significatif que lorsque la puissance du réseau est faible, le rapport entre la valeur du courant traversant l'étage redresseur et la valeur du courant du réseau électrique augmente.

Selon un mode de réalisation, le deuxième étage redresseur comprend deux branches, la première branche étant reliée à une phase du deuxième réseau d'alimentation et la deuxième branche étant reliée au neutre du deuxième réseau d'alimentation.

On peut ainsi utiliser le système de charge avec un réseau monophasé.

Selon un mode de réalisation, le deuxième étage redresseur comprend deux branches, la première branche étant reliée à une première phase du deuxième réseau d'alimentation et la deuxième branche étant reliée à une deuxième phase du deuxième réseau d'alimentation.

On peut ainsi utiliser le système de charge avec un réseau biphasé.

Selon un autre mode de réalisation, la première branche du deuxième étage redresseur est reliée à une phase du deuxième réseau d'alimentation via un des condensateurs de l'étage de filtrage.

Ce branchement est avantageux car étant donnée la loi de calcul de la capacité résultante de deux condensateurs en série, la capacité résultante est encore diminuée par rapport à celle du condensateur de capacité inférieure.

Selon un mode de réalisation supplémentaire, le deuxième étage redresseur comprend au moins deux branches dont la première branche est formée par une branche du premier étage redresseur.

Ainsi, il n'est plus nécessaire d'utiliser quatre interrupteurs et deux branches pour réaliser le deuxième étage redresseur. Cela permet des économies de coût.

Selon un mode de réalisation, le système de charge comprend un moyen d'aiguillage configuré pour aiguiller le courant du premier réseau d'alimentation vers l'étage de filtrage et le premier étage redresseur et pour aiguiller le courant du deuxième réseau d'alimentation vers le deuxième étage redresseur.

On peut ainsi aiguiller le courant du premier réseau d'alimentation vers un étage redresseur dédié à un réseau monophasé de faible puissance.

Pour déterminer si le réseau d'alimentation connecté est un premier ou un deuxième réseau d'alimentation, on peut munir le système de charge d'un moyen de mesure de la puissance du réseau d'alimentation connecté et de détermination du nombre de phases du réseau d'alimentation. Selon un mode de réalisation, lorsque la puissance est inférieure à un certain seuil (par exemple 3 kW) et le nombre de phases déterminé est inférieur strictement à 3 alors on détermine que le réseau d'alimentation connecté est un deuxième réseau d'alimentation. Au contraire, si l'une de ces deux conditions n'est pas remplie on détermine que le réseau d'alimentation connecté est un premier réseau d'alimentation.

Selon une caractéristique de ce mode de réalisation, le moyen d'aiguillage comprend :
- un interrupteur destiné à être connecté en série avec ledit réseau d'alimentation et l'étage de filtrage, ledit interrupteur prenant l'état passant lorsque le premier réseau d'alimentation est connecté et prenant l'état bloqué lorsque le deuxième réseau d'alimentation est connecté; et
- les interrupteurs du deuxième étage redresseur, lesdits interrupteurs prenant l'état bloqué lorsque le premier réseau d'alimentation est connecté et prenant l'état passant lorsque le deuxième réseau d'alimentation est connecté.

Selon une autre caractéristique de ce mode de réalisation, le moyen d'aiguillage comprend :
- une partie des interrupteurs du premier étage redresseur, ladite partie des interrupteurs du premier étage redresseur prenant l'état bloqué lorsque le deuxième réseau d'alimentation est connecté ; et
- une partie des interrupteurs du deuxième étage redresseur, ladite partie des interrupteurs du deuxième étage redresseur prenant l'état bloqué lorsque le premier réseau d'alimentation est connecté.

Il n'est alors plus nécessaire d'avoir un interrupteur dédié pour réaliser l'aiguillage, on réutilise les interrupteurs du premier et du deuxième étage redresseur.

D'autres caractéristiques et avantages de l'invention apparaîtront à l'examen de la description détaillée d'un mode de mise en oeuvre et de réalisation, nullement limitatif, et des dessins annexés sur lesquels :
- la figure 1 illustre schématiquement un système de charge d'une batterie selon l'état de la technique ; et
- les figures 2 à 4 illustrent différents modes de réalisation de systèmes de charge d'une batterie selon l'invention.

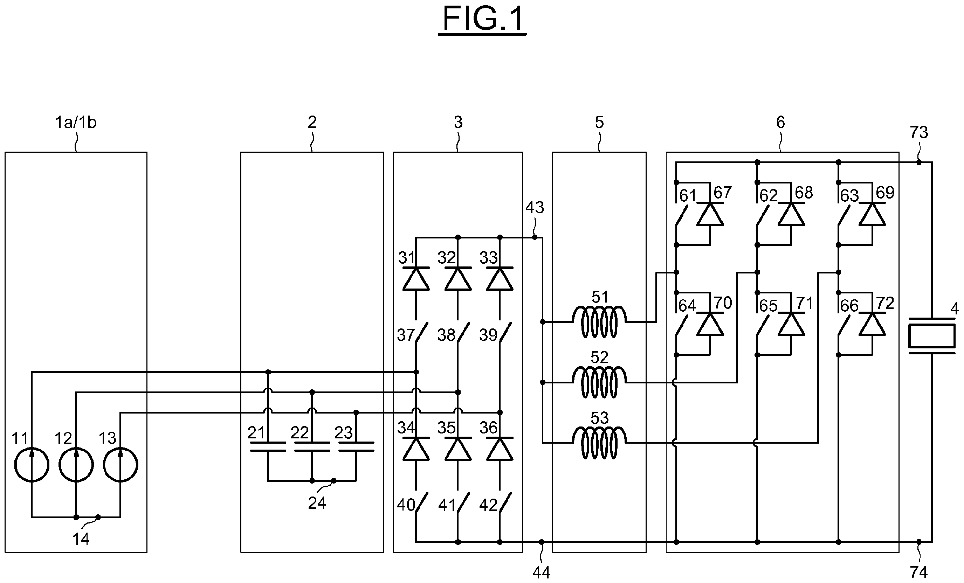

Sur la figure 1, est illustré un système de charge d'une batterie 4 d'un véhicule automobile. Ce système de charge comprend un étage de filtrage 2, un étage redresseur 3, un étage inductif 5 et un étage onduleur 6. Le système de charge est destiné à être connecté via l'étage de filtrage 2 à un réseau d'alimentation 1a/1b. Ce réseau d'alimentation peut être un premier réseau d'alimentation la polyphasé et de puissance forte (supérieure à 3 kW) ou un deuxième réseau d'alimentation 1b monophasé ou polyphasé de puissance faible (inférieure à 3 kW). Le système de charge est représenté connecté au réseau d'alimentation la. Le réseau d'alimentation la représenté ici comprend trois phases 11, 12 et 13 et un neutre 14. Le réseau d'alimentation 1b non représenté est par exemple un réseau monophasé qui comprend une phase 13 et un neutre 14. Le système de charge est également destiné à être connecté à la batterie 4 via l'étage onduleur 6. L'ensemble des étages de filtrage 2, redresseur 3, inductif 5 et onduleur 6 sont connectés en série et dans cet ordre entre le réseau d'alimentation 1a/1b et la batterie 4.

L'étage de filtrage 2 est composé de trois condensateurs 21, 22 et 23, un pour chacune des phases du réseau d'alimentation, connectés entre chacune des phases 11, 12 et 13 et le neutre 24 selon un branchement en étoile. L'étage de filtrage 2 permet de filtrer la tension prélevée sur le réseau d'alimentation connecté de manière à ce que les impulsions de courant générées par l'étage redresseur et l'étage onduleur soient absorbées. En effet, le courant absorbé sur le réseau doit satisfaire à des contraintes de raccordement imposées par les exploitants de réseaux électriques.

L'étage redresseur 3 est composé de trois branches, une pour chacune des phases du réseau d'alimentation.

La première branche est connectée à la phase 11 du réseau d'alimentation la. La première branche comprend en une partie supérieure, un interrupteur 37 connecté en série avec une diode 31 et en une partie inférieure, une diode 34 connectée en série avec un interrupteur 40.

La deuxième branche est connectée à la phase 12 du réseau d'alimentation la. La deuxième branche comprend en une partie supérieure, un interrupteur 38 connecté en série avec une diode 32 et en une partie inférieure, une diode 35 connectée en série avec un interrupteur 41.

La troisième branche est connectée à la phase 13 du réseau d'alimentation la. La troisième branche comprend en une partie supérieure, un interrupteur 39 connecté en série avec une diode 33 et en une partie inférieure, une diode 36 connectée en série avec un interrupteur 42.

Les parties supérieures des trois branches de l'étage redresseur 3 se rejoignent en une première borne de sortie 43 de l'étage redresseur 3. De même les parties inférieures des trois branches se rejoignent en une deuxième borne de sortie 44 de l'étage redresseur 3. La borne 44 est destinée à être connectée à la batterie 4. Tandis que la borne 43 est connectée à l'étage inductif 5.

L'étage inductif 5 comprend trois bobines 51, 52 et 53 connectées en entrée sur la borne de sortie 43. Ces bobines sont celles du stator du moteur électrique du véhicule automobile. Elles sont réutilisées pour fournir un filtrage inductif lors de la charge de la batterie sans ajouter de composants supplémentaires. Le système de charge est ainsi intégré dans le véhicule automobile.

L'étage onduleur 6 comprend trois branches. Chacune des trois bobines 51, 52 et 53 est connectée en sortie sur une branche de l'étage onduleur 6.

La première branche de l'étage onduleur 6 est connectée à la bobine 51 de l'étage inductif 5. La première branche comprend en une partie supérieure, un interrupteur 61 connecté en parallèle avec une diode 67 et en une partie inférieure, un interrupteur 64 connecté en parallèle avec une diode 70.

La deuxième branche de l'étage onduleur 6 est connectée à la bobine 52 de l'étage inductif 5. La deuxième branche comprend en une partie supérieure, un interrupteur 62 connecté en parallèle avec une diode 68 et en une partie inférieure, un interrupteur 65 connecté en parallèle avec une diode 71.

La troisième branche de l'étage onduleur 6 est connectée à la bobine 53 de l'étage inductif 5. La troisième branche comprend en une partie supérieure, un interrupteur 63 connecté en parallèle avec une diode 69 et en une partie inférieure, un interrupteur 66 connecté en parallèle avec une diode 72.

Les parties supérieures des trois branches de l'étage onduleur 6 se rejoignent en une première borne de sortie 73 de l'étage onduleur 6. La borne 73 est destinée à être connectée à une première borne de la batterie 4.

Les parties inférieures des trois branches se rejoignent en une deuxième borne de sortie 74 de l'étage onduleur 6. La borne 74 est reliée à la borne 44 et est destinée à être connectée à une deuxième borne de la batterie 4.

Les états passants ou bloqués de chacun des interrupteurs 37-42 de l'étage redresseur 3 et de chacun des interrupteurs 61-66 de l'étage onduleur 6 sont commandables pour contrôler la tension et l'intensité prélevées sur le réseau d'alimentation connecté (1a, 1b) et fournies à la batterie 4.

Un des problèmes des systèmes de charge tel que celui illustré sur la figure 1 est que l'étage de filtrage 2 et que l'étage redresseur 3 sont dimensionnés pour le premier réseau d'alimentation la qui est un réseau triphasé à forte puissance. Ce dimensionnement défavorise le rendement énergétique lorsqu'on utilise ce système de charge avec le deuxième réseau 1b. Or le deuxième réseau 1b correspond au réseau monophasé auquel les particuliers sont généralement reliés, par exemple le réseau monophasé 230 Volts/50 Hz pour la France.

Cette diminution du rendement énergétique est due à un phénomène physique connu en soi. Tout système alimenté par un réseau alternatif prélève sur ce réseau une puissance électrique apparente. Cette puissance électrique apparente se compose d'une puissance active qui va effectivement être utilisée par le système électrique et d'une puissance réactive qui ne peut pas être utilisée et qui est transportée par un courant réactif déphasé par rapport à celui de la puissance active. Pour qualifier le rapport entre les puissances apparentes, actives et réactives, on utilise un coefficient appelé « cos phi » bien connu de l'homme du métier. Ce coefficient est compris entre 0 et 1 et quand sa valeur se rapproche de la valeur 1, la puissance active se rapproche de la puissance apparente prélevée sur le réseau.

Ainsi, l'utilisation des condensateurs 21, 22 et 23 de l'étage de filtrage dimensionnés pour le premier réseau électrique la avec le deuxième réseau d'alimentation 1b produit un courant réactif important. Le « cos phi » avec le deuxième réseau d'alimentation 1b est de l'ordre de 0.8. Le temps de charge de la batterie 4 est alors augmenté de 20% par rapport au cas idéal d'un « cos phi » égal à 1.

De même, les branches de l'étage redresseur 3 sont dimensionnées pour une forte puissance avec une topologie unidirectionnelle qui permet de compenser le « cos phi » dans le cas du premier réseau d'alimentation la. Ainsi, deux cellules de semi-conducteur sont utilisées pour chaque interrupteur. Les pertes en conduction pour chaque interrupteur 37-42 sont alors égales à celles du courant de l'étage inductif traversant deux semi-conducteurs. Ces pertes sont donc proportionnelles au courant de l'étage inductif 5.

Cela étant, lorsqu'à forte puissance le courant de l'étage inductif 5 est d'une valeur proche de celle du courant prélevé sur le réseau d'alimentation la, à faible puissance en monophasé, le courant de l'étage inductif 5 est dix fois supérieur au courant prélevé sur le réseau d'alimentation 1b. Ainsi, le rapport entre les pertes en conduction et la puissance apparente est, avec un réseau électrique de faible puissance (inférieure à 3 kW) monophasé comme le deuxième réseau d'alimentation 1b, dix fois supérieur à celui avec un réseau électrique de forte puissance triphasé comme le premier réseau d'alimentation la. Les pertes de conduction dans les interrupteurs de découpage 37-42 de l'étage redresseur 3 prennent alors une part importante dans le rendement global du système de charge.

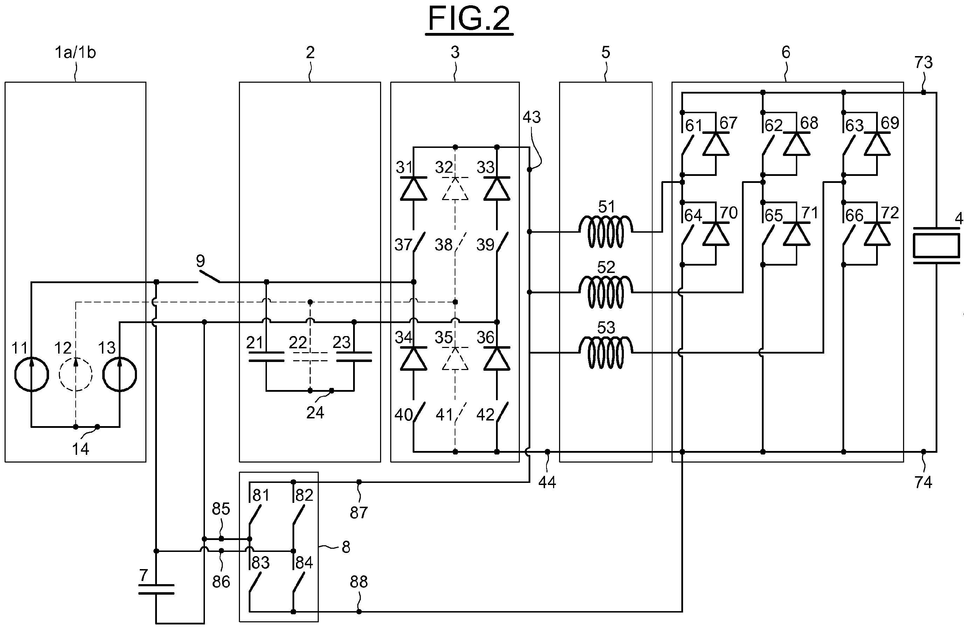

Sur la figure 2, est illustré un système de charge d'une batterie visant à résoudre ces problèmes de rendement énergétique dans le cas de l'utilisation d'un réseau non triphasé et/ou de faible puissance.

Le système de charge de la figure 2 est comme celui de la figure 1 destiné à être connecté à un réseau d'alimentation 1a/1b. Ce réseau d'alimentation peut être un premier réseau d'alimentation la polyphasé et de puissance forte (supérieure à 3 kW) ou un deuxième réseau d'alimentation 1b monophasé ou polyphasé de puissance faible (inférieure à 3 kW).

Le réseau d'alimentation 1b comprend ici deux phases 11 et 13 actives. Le réseau d'alimentation 1b et les parties du système de charge concernées sont représentés ici en traits pleins.

Le réseau d'alimentation la comprend ici trois phases 11, 12 et 13 actives. Le réseau d'alimentation la et les parties du système de charge concernées sont représentés sur la figure 2 à la fois en traits pleins et en trait pointillés.

En plus des étages 2, 3, 5 et 6 similaires à ceux décrits ci-dessus, le système de charge comprend un interrupteur 9 connecté en série entre la phase 11 du réseau d'alimentation connecté 1a/1b et la première branche de l'étage redresseur 3, avant le point de branchement du condensateur 21. Il comprend également un condensateur 7 connecté entre la phase 11 et la phase 13 et un deuxième étage redresseur 8 ayant deux bornes 85 et 86 connectées respectivement à la phase 11 et à la phase 13.

Les branchements du condensateur 7, du deuxième étage redresseur 8 et de l'interrupteur 9 sont illustrés ici dans le cas d'un réseau d'alimentation 1b à deux phases actives 11 et 13. L'homme du métier saura facilement adapter ces branchements dans le cas d'un deuxième réseau d'alimentation 1b avec deux autres phases actives parmi les phases 11, 12, 13 ou dans le cas d'un deuxième réseau d'alimentation 1b avec une des phases 11, 12, 13 active et un branchement au neutre 14.

Le condensateur 7 est connecté entre les phases 11 et 13 et la valeur de la capacité du système de charge vue par le réseau d'alimentation 1b correspond à la capacité du condensateur 7. Ce condensateur 7 permet de filtrer la tension prélevée sur le réseau d'alimentation connecté de manière à ce que les impulsions de courant générées par le deuxième étage redresseur et l'étage onduleur soient absorbées.

Par ailleurs, le condensateur 7 a une capacité inférieure aux capacités des condensateurs 21, 22 et 23. Par exemple, la capacité du condensateur 7 est dix fois plus petite que la capacité de chacun des condensateurs 21, 22 et 23. On réduit ainsi d'autant la valeur du courant réactif prélevé sur le réseau d'alimentation.

Le deuxième étage redresseur 8 comprend deux branches. La première branche est connectée via la borne 85 à la phase 13 du réseau d'alimentation 1b. La première branche comprend en une partie supérieure, un interrupteur 81 et en une partie inférieure, un interrupteur 83. La deuxième branche est connectée via la borne 86 à la phase 11 du réseau d'alimentation 1b. La deuxième branche comprend en une partie supérieure, un interrupteur 82 et en une partie inférieure, un interrupteur 84. Les parties supérieures des deux branches de l'étage redresseur 8 se rejoignent en une première borne de sortie 87 de l'étage redresseur 8. De même les parties inférieures des deux branches se rejoignent en une deuxième borne de sortie 88 de l'étage redresseur 8. La borne 87 est connectée à la borne 43 du premier étage redresseur 3. Tandis que la borne 88 est connectée à la borne 44 du premier étage redresseur 3. Selon un mode de réalisation, les interrupteurs (81-84) du deuxième étage redresseur 8 sont dimensionnés pour un réseau de faible puissance monophasé. Pour cela, on réalise les interrupteurs, par exemple des diodes, des transistors de type Mosfet (Metal Oxide Semiconductor Field Effect Transistor selon un terme anglo-saxon bien connu de l'homme du métier) ou de type IGBT (Insulated Gate Bipolar Transistor selon un terme anglo-saxon bien connu de l'homme du métier), en utilisant une seule cellule de semi-conducteur pour un interrupteur. On réduit ainsi, les pertes de conduction.

Le deuxième étage redresseur 8 est ainsi connecté en parallèle de l'ensemble constitué par l'interrupteur 9, l'étage de filtrage 2 et le premier étage redresseur 3.

Les états passants ou bloqués de l'interrupteur 9 et des interrupteurs du deuxième étage redresseur 8 sont commandables en fonction du réseau connecté (1a, 1b).

Plus précisément, lorsque le réseau d'alimentation la est connecté c'est-à-dire par exemple lorsque le réseau d'alimentation connecté est polyphasé ou est monophasé avec une puissance électrique supérieure à un seuil donné (par exemple 3 kW), l'interrupteur 9 prend l'état passant et les interrupteurs 81-84 du deuxième étage redresseur 8 prennent l'état bloqué. Ainsi, d'une part, le courant en provenance du réseau d'alimentation la va après filtrage par l'étage de filtrage 2 traverser l'étage redresseur 3. Et d'autre part, le courant du réseau d'alimentation la qui se dirige vers le deuxième étage redresseur 8 est bloqué par les interrupteurs 81-84. De plus, étant donné le branchement du condensateur 7 en parallèle avec les condensateurs 21, 22 et 23, et le fait que la valeur de la capacité du condensateur 7 est inférieure à celle des condensateurs 21, 22 et 23, la capacité résultante vu par le réseau d'alimentation la reste de l'ordre de celle des condensateurs 21, 22 et 23.

Lorsque le réseau d'alimentation 1b est connecté c'est-à-dire par exemple lorsque le réseau d'alimentation connecté est monophasé et a une puissance électrique inférieure audit seuil donné (par exemple 3 kW), l'interrupteur 9 prend l'état bloqué et les interrupteurs 81-84 du deuxième étage redresseur 8 sont commandés pour prélever une certaine tension et une certaine intensité au réseau d'alimentation 1b. Ainsi, le courant en provenance du réseau d'alimentation 1b ne peut pas traverser l'étage de filtrage ni l'étage redresseur 3, il se dirige directement vers le deuxième étage redresseur 8. Par ailleurs, avec le condensateur 7 d'une valeur de capacité par exemple dix fois inférieure à celles des condensateurs 21-23, branché entre les deux phases 11 et 13, on réduit d'autant la valeur du courant réactif transmis sur le réseau d'alimentation 1b.

L'ensemble interrupteur 9 et deuxième étage redresseur 8 forme ainsi un moyen d'aiguillage configuré pour aiguiller le courant du premier réseau d'alimentation la vers l'étage de filtrage 2 et le premier étage redresseur 3 et pour aiguiller le courant du deuxième réseau d'alimentation 1b vers le deuxième étage redresseur 8.

Pour déterminer si le réseau d'alimentation connecté est un réseau d'alimentation de type la ou de type 1b, on peut munir le système de charge d'un moyen de mesure de la puissance du réseau d'alimentation connecté et de détermination du nombre de phases de ce réseau d'alimentation.

Selon un mode de réalisation avec ce moyen de mesure et de détermination, lorsque la puissance est inférieure à un certain seuil (par exemple 3 kW) et le nombre de phases déterminé est inférieur strictement à 3 alors on détermine que le réseau d'alimentation connecté est un réseau d'alimentation du deuxième type 1b. Au contraire, si l'une de ces deux conditions n'est pas remplie on détermine que le réseau d'alimentation connecté est un réseau d'alimentation du premier type la.

En outre, tout comme dans le chargeur illustré sur la figure 1, les états passants ou bloqués de chacun des interrupteurs de l'étage onduleur 6 (61-66) et de l'étage redresseur 3 (37-42), sont commandables pour contrôler la tension et l'intensité prélevées sur le réseau d'alimentation la et fournies à la batterie 4.

On obtient ainsi un chargeur versatile qui peut fonctionner dans de bonnes conditions de rendement avec un réseau triphasé ou avec un autre réseau comprenant moins de phases et moins puissant.

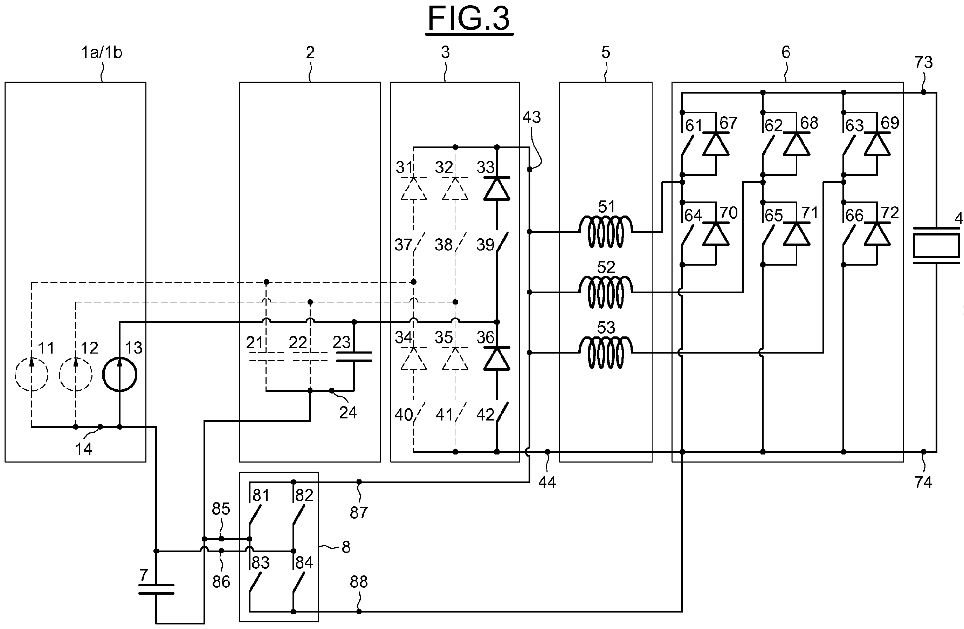

Sur la figure 3, est illustré un autre mode de réalisation d'un système de charge de batterie.

Le système de charge de la figure 3 est comme celui de la figure 2 destiné à être connecté à un réseau d'alimentation 1a/1b.

Le réseau d'alimentation 1b comprend ici une phase active 13 et un neutre 14. Le réseau d'alimentation 1b et les parties du système de charge concernées sont représentés ici en traits pleins.

Le réseau d'alimentation la comprend ici trois phases 11, 12 et 13 actives. Le réseau d'alimentation la et les parties du système de charge concernées sont représentés sur la figure 3 à la fois en traits pleins et en trait pointillés.

Le système de charge illustré sur la figure 3 diffère de celui de la figure 2 en ce que la borne 86 du deuxième étage redresseur 8 est branchée au neutre 14 du réseau d'alimentation, en ce que la borne 85 du deuxième étage redresseur 8 est branchée via le condensateur 23 de l'étage de filtrage 2 à la phase 13 et en ce que le condensateur 7 est connecté entre les deux bornes 85 et 86 du deuxième étage redresseur 8. Le système de charge ne comprend plus d'interrupteur 9.

Les branchements du condensateur 7 et du deuxième l'étage redresseur 8 sont illustrés ici dans le cas d'un deuxième réseau d'alimentation 1b avec une phase active 13 et un neutre 14. L'homme du métier saura facilement adapter ces branchements dans le cas d'un deuxième réseau d'alimentation 1b avec une autre phase active parmi les phases 11 et 12.

Avec le nouveau branchement du condensateur 7, la capacité du système de charge vu par le réseau d'alimentation 1b est égale à la capacité résultante du condensateur 7 en série avec le condensateur 23. Selon la loi de combinaison des condensateurs, l'inverse de la capacité résultante est égal à la somme de l'inverse de la capacité du condensateur 7 avec l'inverse de la capacité du condensateur 23. Ainsi, si l'on suppose que la capacité du condensateur 7 est dix fois inférieure à la capacité du condensateur 23, la capacité résultante est onze fois moins importante que la capacité du condensateur 23. On réduit ainsi d'autant la valeur du courant réactif transmis sur le réseau d'alimentation 1b. Le condensateur 7 en série avec le condensateur 23 permet de filtrer la tension prélevée sur le réseau d'alimentation 1b connecté de manière à ce que les impulsions de courant générées par le deuxième étage redresseur et l'étage onduleur soient absorbées.

Les états passants ou bloqués des interrupteurs 37-42 du premier étage redresseur 3 et des interrupteurs 81-84 du deuxième étage redresseur 8 sont commandables en fonction du réseau connecté (1a, 1b).

Plus précisément, lorsque le réseau d'alimentation la est connecté c'est-à-dire par exemple lorsque le réseau d'alimentation connecté est polyphasé ou est monophasé avec une puissance électrique supérieure à un seuil donné (par exemple 3 kW), les interrupteurs 37-42 du premier étage redresseur 3 sont commandés pour prélever une certaine tension et intensité au réseau d'alimentation la et les interrupteurs 81-84 du deuxième étage redresseur 8 prennent l'état bloqué. Ainsi, d'une part, le courant en provenance du réseau d'alimentation la va après filtrage par l'étage de filtrage 2 traverser l'étage redresseur 3. Et d'autre part, le courant du réseau d'alimentation la qui se dirige vers le deuxième étage redresseur 8 est bloqué par les interrupteurs 81-84.

Lorsque le réseau d'alimentation 1b est connecté c'est-à-dire par exemple lorsque le réseau d'alimentation 1b est monophasé et a une puissance électrique inférieure audit seuil donné (par exemple 3 kW), les interrupteurs du premier étage redresseur 3 prennent l'état bloqué et les interrupteurs 81-84 du deuxième étage redresseur 8 sont commandés pour prélever une certaine tension et une certaine intensité au réseau d'alimentation 1b. Ainsi, le courant en provenance du réseau d'alimentation 1b ne peut pas traverser l'étage redresseur 3, il se dirige directement vers le deuxième étage redresseur 8. Par ailleurs, avec la capacité vue par le réseau électrique 1b onze fois inférieure à celles des condensateurs 21-23, on réduit d'autant la valeur du courant réactif transmis sur le réseau d'alimentation 1b.

L'ensemble premier étage redresseur 3 et deuxième étage redresseur 8 forme ainsi un moyen d'aiguillage configuré pour aiguiller le courant du premier réseau d'alimentation la vers l'étage de filtrage 2 et le premier étage redresseur 3 et pour aiguiller le courant du deuxième réseau d'alimentation 1b vers le deuxième étage redresseur 8.

Pour déterminer si le réseau d'alimentation connecté est un réseau d'alimentation de type la ou de type 1b, on peut, de manière identique au système de charge décrit dans la figure 2, munir le système de charge d'un moyen de mesure de la puissance du réseau d'alimentation connecté et de détermination du nombre de phases de ce réseau d'alimentation. On peut alors à l'aide de ce moyen de mesure et de détermination, réaliser la détermination d'un premier ou d'un deuxième réseau d'alimentation d'une manière identique à celle du système de charge illustré sur la figure 2.

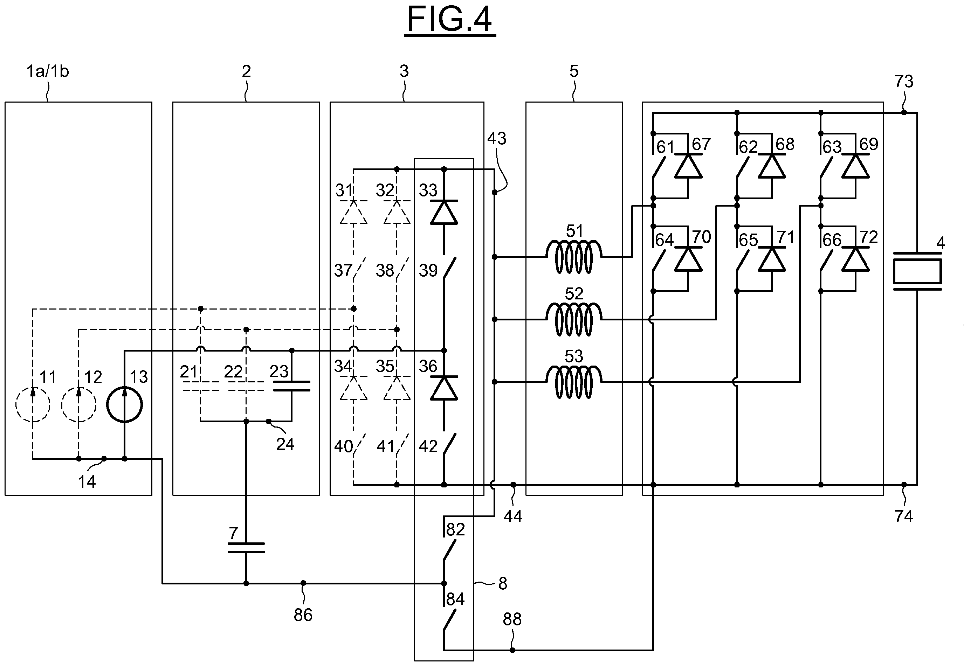

Sur la figure 4, est illustré un autre mode de réalisation d'un système de charge de batterie.

Le système de charge de la figure 4 est comme celui des figures 2 ou 3 destiné à être connecté à un réseau d'alimentation 1a/1b.

Le réseau d'alimentation 1b comprend ici une phase active 13 et un neutre 14. Le réseau d'alimentation 1b et les parties du système de charge concernées sont représentés ici en traits pleins.

Le réseau d'alimentation la comprend ici trois phases 11, 12 et 13 actives. Le réseau d'alimentation la et les parties du système de charge concernées sont représentés sur la figure 4 à la fois en traits pleins et en trait pointillés.

Le système de charge illustré sur la figure 4 diffère de celui de la figure 3 en ce que la première branche du deuxième redresseur 8 est formée par la troisième branche du premier étage redresseur 3. Ainsi, les interrupteurs 39 et 42 du premier étage redresseur sont utilisés pour former les interrupteurs 81 et 83. On obtient ainsi un deuxième étage redresseur dont les pertes de conductions ne sont diminuées que pour une branche mais qui est d'un coût moins important.

De manière similaire au système de charge de la figure 3, les états passants ou bloqués des interrupteurs 37-42 du premier étage redresseur 3 et des interrupteurs 81-84 du deuxième étage redresseur 8 sont commandables en fonction du réseau connecté (1a, 1b).

Plus précisément, lorsque le réseau d'alimentation la est connecté c'est-à-dire par exemple lorsque le réseau d'alimentation connecté est polyphasé ou est monophasé avec une puissance électrique supérieure à un seuil donné (par exemple 3 kW), les interrupteurs 37-42 du premier étage redresseur 3 sont commandés pour prélever une certaine tension et intensité au réseau d'alimentation la et les interrupteurs 82 et 84 du deuxième étage redresseur 8 prennent l'état bloqué. Ainsi, d'une part, le courant en provenance du réseau d'alimentation la va après filtrage par l'étage de filtrage 2 traverser l'étage redresseur 3. Et d'autre part, le courant du réseau d'alimentation la qui se dirige vers le deuxième étage redresseur 8 est bloqué par les interrupteurs 82 et 84.

Lorsque le réseau d'alimentation 1b est connecté c'est-à-dire par exemple lorsque le réseau d'alimentation connecté est monophasé et a une puissance électrique inférieure audit seuil donné (par exemple 3 kW), les interrupteurs 37, 38, 40, 41 du premier étage redresseur 3 prennent l'état bloqué et les interrupteurs 82, 84, 39 et 42 du deuxième étage redresseur 8 sont commandés pour prélever une certaine tension et une certaine intensité au réseau d'alimentation 1. Ainsi, le courant en provenance du réseau d'alimentation ne traverse que la troisième branche de l'étage redresseur 3. Par ailleurs, avec la capacité vue par le réseau électrique onze fois inférieure à celles des condensateurs 21-23, on réduit d'autant la valeur du courant réactif transmis sur le réseau d'alimentation 1b.

Ainsi, de manière similaire au système de charge de la figure 3, l'ensemble premier étage redresseur 3 et deuxième étage redresseur 8 forme un moyen d'aiguillage configuré pour aiguiller le courant du premier réseau d'alimentation la vers l'étage de filtrage 2 et le premier étage redresseur 3 et pour aiguiller le courant du deuxième réseau d'alimentation 1b vers le deuxième étage redresseur 8.

Pour déterminer si le réseau d'alimentation connecté est un réseau d'alimentation de type la ou de type 1b, on peut, de manière identique au système de charge décrit dans les figures 2 ou 3, munir le système de charge d'un moyen de mesure de la puissance de ce réseau d'alimentation connecté et de détermination du nombre de phases du réseau d'alimentation. On peut alors à l'aide de ce moyen de mesure et de détermination, réaliser la détermination d'un premier ou d'un deuxième réseau d'alimentation d'une manière identique à celle du système de charge illustré sur les figures 2 ou 3.

## Revendications

1. Système de charge d'une batterie (4) d'un véhicule automobile, destiné à être raccordé à un réseau d'alimentation (1a, 1b), ledit réseau d'alimentation étant un premier réseau d'alimentation polyphasé (1a) ou un deuxième réseau d'alimentation polyphasé ou monophasé (1b) d'une puissance inférieure à celle du premier réseau, comprenant :
- un étage de filtrage (2) comprenant une pluralité de condensateurs (21, 22, 23) ;
- un premier étage redresseur (3) comprenant une pluralité d'interrupteurs ; et
- un étage onduleur (6) destiné à être raccordé à la batterie (4),
**caractérisé en ce que** le système de charge comprend :
- un deuxième étage redresseur (8) comprenant une pluralité d'interrupteurs, ledit deuxième étage redresseur étant destiné à être connecté entre ledit réseau d'alimentation (1a, 1b) et la batterie (4), en parallèle de l'étage de filtrage (2) et d'une partie au moins du premier étage redresseur (3) ; et
- un condensateur (7) dont la capacité est inférieure à celle de chacun des condensateurs (21, 22, 23) de l'étage de filtrage (2), connecté entre deux phases (11, 13) ou entre une phase et un neutre (13, 14) du deuxième réseau d'alimentation (1b).

2. Système de charge selon la revendication 1, dans lequel les interrupteurs du deuxième étage redresseur (8) comprennent des composants électroniques dimensionnés pour le deuxième réseau d'alimentation (1b).

3. Système de charge selon la revendication 1 ou 2, dans lequel le deuxième étage redresseur (8) comprend deux branches, la première branche (81, 83) étant reliée à une phase (13) du deuxième réseau d'alimentation (1b) et la deuxième branche (82, 84) étant reliée au neutre (14) du deuxième réseau d'alimentation (1b).

4. Système de charge selon l'une quelconque des revendications 1 ou 2, dans lequel le deuxième étage redresseur (8) comprend deux branches, la première branche (81, 83) étant reliée à une première phase (13) du deuxième réseau d'alimentation (1b) et la deuxième branche (82, 84) étant reliée à une deuxième phase (11) du deuxième réseau d'alimentation (1b).

5. Système de charge selon la revendication 3 ou 4, dans lequel la première branche (81, 83) du deuxième étage redresseur (8) est reliée à une phase (13) du deuxième réseau d'alimentation (1b) via un des condensateurs (23) de l'étage de filtrage (2).

6. Système de charge selon l'une quelconque des revendications 1 à 4, dans lequel le deuxième étage redresseur (8) comprend au moins deux branches dont la première branche (81, 83) est formée par une branche (39, 42) du premier étage redresseur (3).

7. Système de charge selon l'une des revendications 1 à 6, comprenant un moyen d'aiguillage configuré pour aiguiller le courant du premier réseau d'alimentation vers l'étage de filtrage (2) et le premier étage redresseur (3) et pour aiguiller le courant du deuxième réseau d'alimentation (1b) vers le deuxième étage redresseur (8).

8. Système de charge selon la revendication 7, dans lequel le moyen d'aiguillage comprend :
- un interrupteur (9) destiné à être connecté en série avec ledit réseau d'alimentation (1a, 1b) et l'étage de filtrage (2), ledit interrupteur (9) prenant l'état passant lorsque le premier réseau d'alimentation (1a) est connecté et prenant l'état bloqué lorsque le deuxième réseau d'alimentation (1b) est connecté; et
- les interrupteurs du deuxième étage redresseur (8), lesdits interrupteurs prenant l'état bloqué lorsque le premier réseau d'alimentation (1a) est connecté et prenant l'état passant lorsque le deuxième réseau d'alimentation (1b) est connecté.

9. Système de charge selon la revendication 7 ou 8, dans lequel le moyen d'aiguillage comprend :
- une partie des interrupteurs du premier étage redresseur (3), ladite partie des interrupteurs du premier étage redresseur (3) prenant l'état bloqué lorsque le deuxième réseau d'alimentation (1b) est connecté ; et
- une partie des interrupteurs du deuxième étage redresseur (8), ladite partie des interrupteurs du deuxième étage redresseur (8) prenant l'état bloqué lorsque le premier réseau d'alimentation (1a) est connecté.

## Patentansprüche

1. System zum Laden einer Batterie (4) eines Kraftfahrzeugs, das dazu bestimmt ist, mit einem Versorgungsnetz (1a, 1b) verbunden zu werden, wobei das Versorgungsnetz ein erstes mehrphasiges Versorgungsnetz (1a) oder ein zweites mehrphasiges oder einphasiges Versorgungsnetz (1b) mit einer Leistung, die kleiner als jene des ersten Netzes ist, enthält, das Folgendes umfasst:
- eine Filterungsstufe (2), die mehrere Kondensatoren (21, 22, 23) enthält;
- eine erste Gleichrichterstufe (3), die mehrere Ein/Aus-Schalter enthält; und
- eine Wechselrichterstufe (6), die dazu bestimmt ist, mit der Batterie (4) verbunden zu werden,
**dadurch gekennzeichnet, dass** das Ladesystem Folgendes umfasst:
- eine zweite Gleichrichterstufe (8), die mehrere Ein/Aus-Schalter enthält, wobei die zweite Gleichrichterstufe dazu bestimmt ist, mit dem Versorgungsnetz (1a, 1b) und mit der Batterie (4) parallel zu der Filterungsstufe (2) und wenigstens zu einem Teil der ersten Gleichrichterstufe (3) verbunden zu werden; und
- einen Kondensator (7), dessen Kapazität kleiner als jene jedes der Kondensatoren (21, 22, 23) der Filterungsstufe (2) ist und der zwischen zwei Phasen (11, 13) oder zwischen eine Phase und einen Neutralleiter (13, 14) des zweiten Versorgungsnetzes (1b) geschaltet ist.

2. Ladesystem nach Anspruch 1, wobei die Ein/AusSchalter der zweiten Gleichrichterstufe (8) elektronische Komponenten enthalten, die für das zweite Versorgungsnetz (1b) dimensioniert sind.

3. Ladesystem nach Anspruch 1 oder 2, wobei die zweite Gleichrichterstufe (8) zwei Zweige umfasst, wovon der erste Zweig (81, 83) mit einer Phase (13) des zweiten Versorgungsnetzes (1b) verbunden ist und der zweite Zweig (82, 84) mit dem Neutralleiter (14) des zweiten Versorgungsnetzes (1b) verbunden ist.

4. Ladesystem nach einem der Ansprüche 1 oder 2, wobei die zweite Gleichrichterstufe (8) zwei Zweige umfasst, wovon der erste Zweig (81, 83) mit einer ersten Phase (13) des zweiten Versorgungsnetzes (1b) verbunden ist und der zweite Zweig (82, 84) mit einer zweiten Phase (11) des zweiten Versorgungsnetzes (1b) verbunden ist.

5. Ladesystem nach Anspruch 3 oder 4, wobei der erste Zweig (81, 83) der zweiten Gleichrichterstufe (8) mit einer Phase (13) des zweiten Versorgungsnetzes (1b) über einen der Kondensatoren (23) der Filterungsstufe (2) verbunden ist.

6. Ladesystem nach einem der Ansprüche 1 bis 4, wobei die zweite Gleichrichterstufe (8) wenigstens zwei Zweige umfasst, wovon der erste Zweig (81, 83) durch einen Zweig (39, 42) der ersten Gleichrichterstufe (3) gebildet ist.

7. Ladesystem nach einem der Ansprüche 1 bis 6, das ein Lenkungsmittel umfasst, das konfiguriert ist, den Strom des ersten Versorgungsnetzes zu der Filterungsstufe (2) und der ersten Gleichrichterstufe (3) zu lenken und den Strom des zweiten Versorgungsnetzes (1b) zu der zweiten Gleichrichterstufe (8) zu lenken.

8. Ladesystem nach Anspruch 7, wobei das Lenkungsmittel Folgendes umfasst:
- einen Ein/Aus-Schalter (9), der dazu bestimmt ist, mit dem Versorgungsnetz (1a, 1b) und der Filterungsstufe (2) in Reihe geschaltet zu werden, wobei der Ein/Aus-Schalter (9) den Durchlasszustand annimmt, wenn das erste Versorgungsnetz (1a) angeschlossen ist, und den Sperrzustand annimmt, wenn das zweite Versorgungsnetz (1b) angeschlossen ist; und
- die Ein/Aus-Schalter der zweiten Gleichrichterstufe (8), wobei die Ein/Aus-Schalter den Sperrzustand annehmen, wenn das erste Versorgungsnetz (1a) angeschlossen ist und den Durchlasszustand annehmen, wenn das zweite Versorgungsnetz (1b) angeschlossen ist.

9. Ladesystem nach Anspruch 7 oder 8, wobei das Lenkungsmittel Folgendes umfasst:
- einen Teil der Ein/Aus-Schalter der ersten Gleichrichterstufe (3), wobei der Teil der Ein/AusSchalter der ersten Gleichrichterstufe (3) den Sperrzustand annimmt, wenn das zweite Versorgungsnetz (1b) angeschlossen ist; und
- einen Teil der Ein/Aus-Schalter der zweiten Gleichrichterstufe (8), wobei der Teil der Ein/AusSchalter der zweiten Gleichrichterstufe (8) den Sperrzustand annimmt, wenn das erste Versorgungsnetz (1a) angeschlossen ist.

## Claims

1. System for charging a motor vehicle battery (4), intended to be connected to a power supply network (1a, 1b), said power supply network being a first multiphase power supply network (1a) or a second multiphase or single-phase power supply network (1b) with a power lower than that of the first network, comprising:
- a filtering stage (2) comprising a plurality of capacitors (21, 22, 23);
- a first rectifier stage (3) comprising a plurality of switches; and
- an inverter stage (6) intended to be connected to the battery (4),
in which the charging system comprises:
- a second rectifier stage (8) comprising a plurality of switches, said second rectifier stage being intended to be connected between said power supply network (1a, 1b) and the battery (4), in parallel with the filtering stage (2) and at least a portion of the first rectifier stage (3); and
- a capacitor (7) the capacitance of which is lower than that of each of the capacitors (21, 22, 23) of the filtering stage (2), connected between two phases (11, 13) or between a phase and a neutral (13, 14) of the second power supply network (1b).

2. Charging system according to Claim 1, in which the switches of the second rectifier stage (8) comprise electronic components dimensioned for the second power supply network (1b).

3. Charging system according to Claim 1 or 2, in which the second rectifier stage (8) comprises two branches, the first branch (81, 83) being connected to a phase (13) of the second power supply network (1b) and the second branch (82, 84) being connected to the neutral (14) of the second power supply network (1b).

4. Charging system according to either one of Claims 1 and 2, in which the second rectifier stage (8) comprises two branches, the first branch (81, 83) being connected to a first phase (13) of the second power supply network (1b) and the second branch (82, 84) being connected to a second phase (11) of the second power supply network (1b).

5. Charging system according to Claim 3 or 4, in which the first branch (81, 83) of the second rectifier stage (8) is connected to a phase (13) of the second power supply network (1b) via one of the capacitors (23) of the filtering stage (2).

6. Charging system according to any one of Claims 1 to 4, in which the second rectifier stage (8) comprises at least two branches, the first branch of which (81, 83) is formed by a branch (39, 42) of the first rectifier stage (3).

7. Charging system according to one of Claims 1 to 6, comprising a switching means configured for switching the current of the first power supply network to the filtering stage (2) and the first rectifier stage (3) and for switching the current of the second power supply network (1b) to the second rectifier stage (8).

8. Charging system according to Claim 7, in which the switching means comprises:
- a switch (9) intended to be connected in series with said power supply network (1a, 1b) and the filtering stage (2), said switch (9) taking the 'on' state when the first power supply network (1a) is connected and taking the 'off' state when the second power supply network (1b) is connected; and
- the switches of the second rectifier stage (8), said switches taking the 'off' state when the first power supply network (1a) is connected and taking the 'on' state when the second power supply network (1b) is connected.

9. Charging system according to Claim 7 or 8, in which the switching means comprises:
- a portion of the switches of the first rectifier stage (3), said portion of the switches of the first rectifier stage (3) taking the 'off' state when the second power supply network (1b) is connected; and
- a portion of the switches of the second rectifier stage (8), said portion of the switches of the second rectifier stage (8) taking the 'off' state when the first power supply network (1a) is connected.
